(19) **Europäisches Patentamt / European Patent Office / Office européen des brevets**

(11)  **EP 2 402 142 B1**

(12)  # EUROPEAN PATENT SPECIFICATION

(45) Date of publication and mention
of the grant of the patent:
**22.08.2018 Bulletin 2018/34**

(51) Int Cl.:
**B29C 47/06** (2006.01)     **A41G 1/00** (2006.01)
**E04H 17/14** (2006.01)     **B29C 47/00** (2006.01)

(21) Application number: **11172053.8**

(22) Date of filing: **30.06.2011**

(54) **Method for forming imitation branches**

**Verfahren zur Bildung von Imitationszweigen**

**Procédé de formation de branches d'imitation**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2010 BE 201000389**

(43) Date of publication of application:
**04.01.2012 Bulletin 2012/01**

(73) Proprietor: **Solidor bvba
8930 Lauwe (BE)**

(72) Inventors:
• **Dejans, Olivier
8930 LAUWE (BE)**
• **Dejans, Emmanuel
8930 LAUWE (BE)**

(74) Representative: **Ostyn, Frans
KOB NV
President Kennedypark 31 c
8500 Kortrijk (BE)**

(56) References cited:
| EP-A1- 1 142 697 | JP-A- 11 256 883 |
| JP-A- 2000 352 225 | JP-A- 2004 174 721 |
| US-A- 3 280 847 | US-A- 5 320 794 |
| US-A1- 2006 147 655 | US-A1- 2006 185 233 |

• **Anonymous: "DuPont Surlyn Extrusion Guide",
DuPont , 2 December 2003 (2003-12-02), pages
1-21, XP002695506, Retrieved from the Internet:
URL:http://www2.dupont.com/Surlyn/en_US/as
sets/downloads/surlyn_extrusion_guide.pdf
[retrieved on 2013-04-15]**
• **DATABASE WPI Week 200216 Thomson
Scientific, London, GB; AN 2002-117965
XP002622061, -& JP 2001 317235 A (KOMAZAWA
H) 16 November 2001 (2001-11-16)**

**Description**

The present invention relates, on the one hand, to a method for forming imitation branches according to claim 1. On the other hand, the present invention relates to an imitation branch according to claim 9. The present invention relates in particular to a method for forming imitation branches, also referred to as fake branches, suitable for forming partition walls, decorative walls, furniture, decorative material for both internal and external applications, etc. The formation of partition walls or other embodiments through the use of natural branches (for example hazel) or another natural material is known per se. The Dutch patent publication NL 1032935 C describes a wall structure filled with whole coconut shells or parts thereof, which are clamped on and trapped between two layers of wire mesh, such that the coconut shells remain clamped in between.

The use of natural materials, in particular natural branches, in the formation of partition walls, furniture and/or decorative material has the drawback that in the course of time (approx. 5 years) they die, which is aesthetically unattractive and, moreover, would make it possible to look through the product formed from the natural branches.

The object of the present invention is to provide a solution to the above-stated problem.

American patent publication US 2006/0185233 describes a method for forming structures for supporting plants and the like, wherein a steel rod is provided by means of an extruder with a mixture of plastic and wood fibres. This patent publication does not however describe a method for forming imitation branches from plastic.

The object of the invention is achieved by providing a method for forming imitation branches, wherein a polymer mass comprising an expandable plastic is melted under pressure in a first extruder to form a first mixture, is then driven through an extrusion head and is drawn from this extrusion head in the form of a plastic strand, wherein the method further comprises the following steps:

- the mixing of at least a quantity of particles comprising vegetable fibres with at least a quantity of polymer in a second extruder to form a second mixture;
- in said extrusion head the simultaneous extrusion of the formed second mixture with the first mixture so that the polymer at least partially encloses the said particles;

whereby, on the basis of the formed second mixture, a first layer is formed on the plastic strand, which first layer shall at least partially cover the outer surface of this plastic strand. Preferably, on the basis of the formed second mixture, a first layer is formed on the plastic strand, which first layer shall at least partially cover the outer surface of this plastic strand and the plastic strand drawn from the extrusion head shall provide a natural look. More particularly, the plastic strand shall acquire a bark-like (external) appearance.

By producing imitation branches in this way, a branch having an almost perfectly natural appearance, and even a natural smell, is obtained. The smell shall be determined by the chosen vegetable fibres. In a preferred method, the used vegetable fibres are wood fibres (possibly mixed with a binder). Other possible vegetable fibres which can be used in the method in accordance with the invention are fibres based on: hemp, bamboo, straw, sisal, coir, etc.

Compared to natural branches, imitation branches formed from plastic have the advantage that they have a much longer life (at least 15 years), they are perfectly recyclable and they do not die. Moreover, they can be made UV-resistant. In addition, the formed imitation branch, as a result of the first layer described above, shall have a natural colouring under the influence of the weather conditions, so the imitation branch shall exhibit a darker colouring during rainfall, for example.

With the method in accordance with the invention, it is perfectly possible to produce an imitation branch which is barely distinguishable from a natural branch.

According to a more preferred method in accordance with the invention, the polymer mass (on the basis of which the plastic strands is formed) and the polymer of the second mixture comprises a thermoplastic material. Preferably, the said polymer mass and the polymer of the second mixture is according to the present invention a polymer consisting of polypropylene, low-density polyethylene, high-density polyethylene, polyvinyl chloride (PVC), polystyrene, ethyl vinyl acetate, acrylonitrile-butadiene-styrene (ABS) and/or polyolefin.

According to a first preferred method in accordance with the invention, the formed plastic strand is of tubular (hollow) construction. In a second preferred method, the formed plastic strand is of solid construction.

In a particular method according to the present invention, the plastic strand is provided with at least the first layer, is subsequently cooled and is shortened to the desired length, during cooling the plastic strand being at least partially drawn through a moving cooling medium, whereupon the plastic strand, over at least a part of its path through the cooling medium, is completely immersed in this cooling medium.

Through the use of a moving cooling medium, an irregular cooling is created, so that a whole (plastic strand + first layer) having an irregularly shaped outer surface is obtained.

By changes in the surface structure should be understood, within the framework of the present invention: bumps, indentations, local thickenings, swirls, line pattern, etc.

Complete immersion in the cooling medium has the advantage that the formed imitation branch is provided with the indentations over the whole of its periphery. Preferably, the plastic strand is immersed shortly after having left the extrusion head.

Preferably, during cooling, gas bubbles are provided on at least a part of the outer surface of the plastic strand, which gas bubbles at irregular locations insulate the surface of the plastic strand from the cooling medium, whereby the plastic strand on its outer surface is at least partially provided with changes in the surface structure. In particular, the said cooling medium is water and the said gas bubbles are air and/or nitrogen bubbles.

The presence of such (gas) bubbles ensures that the surface of the plastic strand at irregular locations is insulated from the cooling medium, whereby the cooling process at these locations is completely different from the locations where no air and/or nitrogen bubbles are present. At the level of the locations where air and/or nitrogen bubbles were present during the cooling process, circular and/or oval-shaped indentations, also referred to as knots, are formed in the surface of the plastic strand. Such indentations enhance the natural appearance.

In accordance with a particular method according to the invention, the method further comprises the following steps:

- the mixing of at least a quantity of polymer with at least a quantity of additive to form a third mixture;
- the co-extrusion of the formed third mixture with the second mixture; whereby, on the basis of the formed third mixture, a second layer is provided on at least a part of the first layer.

Through the application of a second layer, additional characteristics, effects can be generated.

Both the first, second and third mixtures can be provided with additives in order in this way to impart well-defined characteristics to the formed imitation branch. Possible additives are: stabilizers, flame-retardant additives, colour pigments, etc...

The first, second and third mixture can be mixed with cheaper or recycled material in order thereby to obtain a cheap end product.

Both the second and third (and possibly a fourth) mixture are co-extruded to form an imitation branch according to the present invention. The mixing can take place before and/or still during the co-extrusion. During this extrusion process, the respective mixtures are compressed and then led, for example, through a nozzle.

In a particular method according to the present invention, at the level of the extrusion head outlet, the velocity at which the polymer mass is driven through the extrusion head is mutually different on the different sides of the extrusion head outlet. As a result of the lower flow velocity of the polymer mass, the plastic strand shall in this location exhibit a ribbed surface.

In a more particular method according to the present invention, the formed imitation branch is subjected to an after-treatment. Preferably, a choice is made from one or more of the following after-treatments: scouring, brushing, sand-blasting, drawing through a Teflon-coated heatable die and/or hot-air blowing.

Another subject of the present patent application relates to an imitation branch, comprising a plastic strand made of an expandable plastic, wherein the said plastic strand, over at least a part of its outer surface, is provided with a first layer which is connected to the plastic strand by means of co-extrusion, this first layer being produced from a composite material consisting of:

- a quantity of particles comprising vegetable fibres;
- a quantity of polymer, this polymer at least partially enclosing the said particles.

In a preferred embodiment of the imitation branch in accordance with the invention, this is produced according to the method as described above.

The present invention further relates to a wall panel comprising a number of imitation branches in accordance with the present invention, the use of such imitation branches in the production of wall panels, flower boxes, furniture or similar embodiments, and to a wall structure comprising such a wall panel, this wall structure comprising a metal or wooden frame between which or against which the wall panel is mounted.

In order to further illustrate the characteristics of the present invention and indicate additional advantages and peculiarities thereof, there now follows a more detailed description of the method according to the invention. Let it be clear that nothing in the following description can be interpreted as a limitation of the protection sought in the claims.

In this description, reference is made by means of reference numerals to the attached drawings, wherein:

- *Figures 1 to 3: are a representation of a number of possible extruder (+ co-extruder) and die configurations for the formation of the imitation branches in accordance with the method according to the invention;*
- *Figure 4: represents a cross section through a number of formed imitation branches, the plastic strand of which is of solid construction;*

- *Figure 5: represents a cross section through a number of formed imitation branches, the plastic strand of which is of hollow construction.*

The present invention essentially relates to a method for forming imitation branches (1) from an expanded thermoplastic plastics material combined and/or mixed with vegetable fibres. Thus formed imitation branches (1) are perfectly suited to the formation of partition walls, decorative walls, furniture, decorative material, flower pots, or the like. The formed branches (1) are very flexible and can consequently likewise be woven.

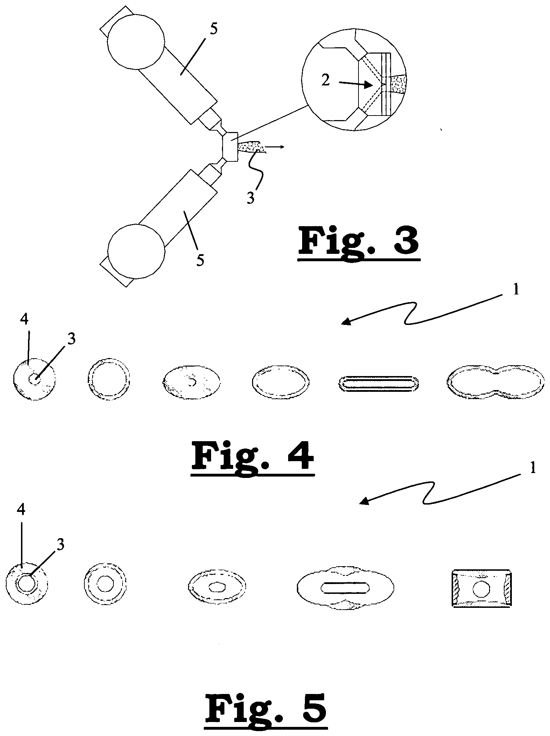

Imitation branches (1) have the great advantage over natural branches that they have a much longer life. Moreover, they are recyclable and virtually do not decline in quality. Normally the imitation branches (1) have a diameter ranging between 10 and 26 mm, preferably between 12 and 24 mm. Figures 4 and 5 show a number of possible embodiments of imitation branches (1) in accordance with the invention, Fig. 4 representing the cross section through a number of imitation branches (1) in accordance with the present invention which are of solid construction, whilst Fig. 5 represents the cross section through a number of imitation branches (1) in accordance with the present invention which are of hollow construction.

In the case of plastics imitation branches (1), it is important that they outwardly barely differ from branches made of a natural material. This effect is obtained by producing the branches (1) with the method according to the invention. In accordance with the present invention, a polymer mass is melted under pressure in an extrusion device (5) to form a first mixture, is then driven through an extrusion head (2) and drawn from this extrusion head (2), with the aid of a drawing device, in the form of an elongate plastic strand (3), which is subsequently cooled and shortened to the desired length. The specific appearance which almost perfectly imitates a natural branch is obtained by:

- the mixing of at least a quantity of particles comprising vegetable fibres with at least a quantity of polymer to form a second mixture;
- the co-extrusion of the formed second mixture with the first mixture, so that the polymer at least partially encloses the said particles;

whereby, on the basis of the formed second mixture, a first layer is formed on the plastic strand, which first layer shall at least partially cover the outer surface of this plastic strand.

The used polymers for, on the one hand, the first mixture, on the basis of which the plastic strand (3) is formed, and, on the other hand, the second mixture, on the basis of which the first layer is formed, essentially comprise a thermoplastic material such as, for example, PE or HDPE. However, other known plastics likewise fall within the scope of protection of the present invention. An expandable plastics material is used for the formation of the plastic strand (3).

The first layer shall ensure that a branch which has a virtually perfect natural look, and even has a natural smell, is obtained. The smell and appearance shall be determined by the chosen vegetable fibres. The following vegetable fibres, for example, can be used: wood fibres, fibres based on: hemp, bamboo, straw, sisal, coir, etc... The abovementioned fibres can possibly also be mixed with a suitable binder. The formed imitation branches have the added advantage that a natural discolouration shall occur according to the weather: a darker appearance in wet weather and lighter appearance in dry (sunny) weather.

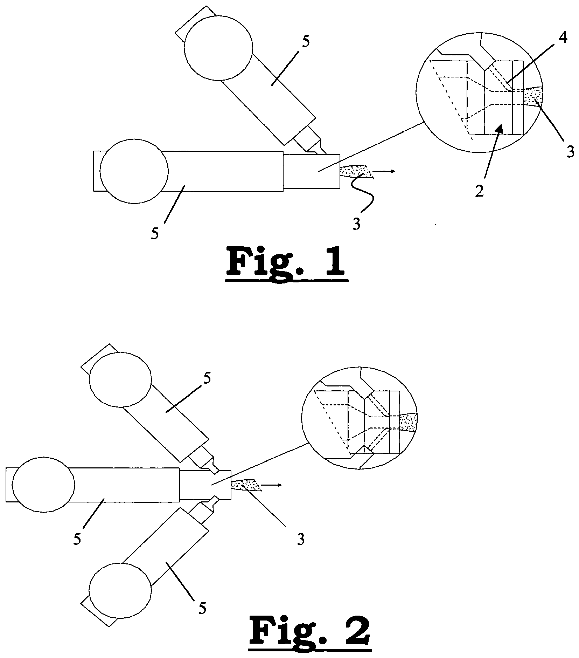

During the extrusion, the said mixtures are melted by an extrusion screw and then forced under pressure through an extrusion head (2) (die). Figures 1 to 3 show some possible arrangements with which the method in accordance with the invention can be implemented. As previously stated, the first layer is applied by co-extrusion. Co-extrusion is the simultaneous extrusion or the simultaneous execution of a plurality of extrusions. As can be seen from Figures 1 to 3, a plurality of extruders (5) and a die (2) are in this case employed. As can be seen from the detailed representation of Figures 1 to 3, the die (2) (extrusion head) can consist of various plates provided with a central opening for the extrusion of a certain polymer mass and one or more joint openings, a fully or partially enclosing layer being extruded and melted around the core (3) at the same extrusion moment. Various forms of co-extrusion are known, so the melt flows of the fluid mixtures can at once come together and be pressed together through the die.

Depending on the desired characteristics of the imitation branch which it is wished to obtain, the plastic strand can additionally be provided, besides a first layer, with a second, third and possibly fourth layer. To the abovementioned mixtures can also be added various additives, such as, for example, UV stabilizers, fire retardants, pigments, etc... Below, a number of examples are given of possible compositions.

Example 1

plastic strand = polymer (for example PE) + expanding agent + colouring agent

first layer = polymer + wood fibre + expanding agent (foaming agent) + antioxidants

second layer = polymer + colouring agent + antioxidants

Example 2

plastic strand = polymer + expanding agent

first layer = polymer + wood fibre + colouring agent + antioxidants

Example 3

plastic strand = polymer + colouring agent + antioxidants

first layer = polymer + wood fibre + expanding agent + colouring agent

Example 4

plastic strand = polymer + recyclate + antioxidants

first layer = recyclate + wood fibre

Example 5

plastic strand = polymer

first layer = polymer + wood fibre + antioxidants

second layer = recyclate + wood fibre + antioxidants

Since a branch is being imitated, the outlet of the extrusion head (2) is of circular, ribbon-shaped or oval-shaped construction. By adapting the internal shape of the die, additional surface effects might possibly be generated on the plastic strand (3).

After the elongate plastic strand (3), provided with the at least one layer which ensures that a natural look is obtained, has been driven through the extrusion head (2) and drawn from this extrusion head (2) with the aid of a drawing device (8), it is cooled. In order to generate additional effects, the whole comprising plastic strand / first layer + (possibly additional layers) can at least partially be drawn (immersed) through a moving cooling medium during the cooling process. As a result of the 'turbulent' cooling, the whole is at least partially provided on its outer surface with changes in the surface structure. Once the changes have been made in the surface structure, the whole can be dried, for example by passing along a drier.

Generally water is used as the cooling medium. During the cooling process, air and/or nitrogen bubbles can be provided on at least a part of the whole. The presence of such bubbles ensures that the outer surface of the whole at irregular locations is insulated from the cooling medium, whereby the cooling process in these specific locations is completely different from the locations where no air and/or nitrogen bubbles are present. At the level of the locations where air and/or nitrogen bubbles were present during the cooling process, circular indentations, oval-shaped indentations, indentations with blown centre and/or blow holes are formed in the surface of the whole. Such indentations enhance the natural appearance and can be compared with the so-called knots or shoots present in natural branches.

Tests have shown that the depth of the indentation, indentation with blown centre, blow hole is dependent on the size of the air bubble, large air bubbles giving deeper impressions than smaller ones.

The air and/or nitrogen bubbles can be introduced into the cooling medium in various ways. Thus air bubbles are already produced by the continuous running of flowing water into the cooling bath. Another way consists in continuously aerating the cooling bath with the aid of an aeration system. Air bubbles can likewise be formed by projecting liquid (water) droplets onto the surface of the cooling medium by means of one or more liquid-projecting device(s).

Since the whole has a specific gravity which is less than 1 and thus remains floating on the water surface, the device for forming imitation branches (1) comprises means which keep the whole immersed over at least a part of its path.

It is also possible not to immerse the whole and to have it float on the liquid surface of the cooling medium. In this case, that portion of the whole which comes into contact with the cooling medium, for example water, shall exhibit a line pattern/structure.

In order to make additional changes to the surface structure of the formed imitation branch, the flow velocity of the polymer mass can also, for example, be varied, and extrusion can be performed at temperatures which are lower than those which are normally employed.

Once the whole has been cooled, it leaves the device via a drawing device and is cut to the desired size and packaged. The cut length is dependent on the type of packaging: if packaged in rolls, imitation branches are cut to lengths of 100 to 150 metres, and if packaged individually, are cut to lengths of 1 to 5 metres.

Before or after (prior to possible weaving or assembly) the formed imitation branch (1) is packaged, it can be subjected to an after-treatment (not represented in the attached figures). Preferably, a choice is made from one or more of the following after-treatments: scouring, brushing, sand-blasting, drawing through a heatable die and/or hot-air blowing. In the after-treatment, different types of means can be used, such as, for example: abrasive paper of different grain size, steel brushes, copper brushes, as well as sand-blasting using various grains such as: metal grains, glass grains and various sand grains (coarse, large, etc...).

The formed imitation branches (1) are ideally suited for use in the production of different embodiments, such as, for example: partition walls, noise barriers, decorative walls, furniture, decorative material, or the like. Thus, in the formation of, for example, partition walls (wall structure), a number of such imitation branches shall be mounted (possibly woven) between or against a wooden or metal frame structure.

It is evident that the above-described method can likewise be used for the production of other shaped bodies, such as, for example, profiles, plate-shaped elements or any other shaped body made of plastic which must generate a natural effect.

**Claims**

1. Method for forming imitation branches (1), wherein a polymer mass comprising an expandable plastic is melted under pressure in a first extruder to form a first mixture, is then driven through an extrusion head (2) and is drawn from this extrusion head (2) in the form of a plastic strand (3), whereby the method further comprises the following steps:

   - the mixing of at least a quantity of particles comprising vegetable fibres with at least a quantity of polymer in a second extruder to form a second mixture;
   - in said extrusion head (2) the simultaneous extrusion of the formed second mixture with the first mixture so that the polymer at least partially encloses the said particles;

   whereby, on the basis of the formed second mixture, a first layer (4) is formed on the plastic strand (3), which first layer shall at least partially cover the outer surface of this plastic strand (3).

2. Method for forming imitation branches (1) according to Claim 1, **characterized in that** the plastic strand (3) is provided with at least the first layer (4), is subsequently cooled and is shortened to the desired length, during cooling the plastic strand (3) being at least partially drawn through a moving cooling medium (4), whereupon the plastic strand (3), over at least a part of its path through the cooling medium (4), is completely immersed in this cooling medium (4).

3. Method according to Claim 2, **characterized in that,** during cooling, gas bubbles are provided on at least a part of the outer surface of the plastic strand (3), which gas bubbles at irregular locations insulate the surface of the plastic strand (3) from the cooling medium (4), whereby the plastic strand (3) on its outer surface is at least partially provided with changes in the surface structure.

4. Method according to Claim 2 or 3, **characterized in that** the said cooling medium is water and **in that** the said gas bubbles are air and/or nitrogen bubbles.

5. Method for forming imitation branches (1) according to one of the preceding claims, **characterized in that** the said vegetable fibres are wood fibres.

6. Method for forming imitation branches (1) according to one of the preceding claims, **characterized in that** the formed plastic strand (3) is of tubular construction.

7. Method for forming imitation branches (1) according to one of the preceding claims, **characterized in that** the method further comprises the following steps:

- the mixing of at least a quantity of polymer with at least a quantity of additive to form a third mixture;
- the co-extrusion of the formed third mixture with the second mixture;

whereby, on the basis of the formed third mixture, a second layer is provided on at least a part of the first layer (4).

8. Method for forming imitation branches (1) according to one of the preceding claims, **characterized in that,** at the level of the extrusion head outlet, the velocity at which the polymer mass is driven through the extrusion head (2) is mutually different on the different sides of the extrusion head outlet.

9. Imitation branch (1), comprising a plastic strand (3) made of an expandable plastic, wherein the said plastic strand (3), over at least a part of its outer surface, is provided with a first layer (4) which is connected to the plastic strand (3) by means of co-extrusion, this first layer being produced from a composite material consisting of:

- a quantity of particles comprising vegetable fibres;
- a quantity of polymer, this polymer at least partially enclosing the said particles.

10. Wall panel comprising a number of imitation branches (1) according to Claim 9 or comprising a number of imitation branches produced according to a method described in one of claims 1 to 8

11. Wall structure comprising a wall panel according to Claim 10, the said wall structure comprising a metal or wooden frame between which or against which the wall panel is mounted.

**Patentansprüche**

1. Verfahren zum Bilden von Imitationszweigen (1), wobei eine Polymermasse, die einen expandierbaren Kunststoff umfasst, unter Druck in einem ersten Extruder geschmolzen wird, um eine erste Mischung zu bilden, dann durch einen Extruderkopf (2) geführt und von diesem Extruderkopf (2) in Form eines Kunststoffstrangs (3) gezogen wird, wobei das Verfahren ferner die folgenden Schritte umfasst:

- das Mischen mindestens einer Menge Teilchen, die Pflanzenfasern umfassen, mit mindestens einer Menge Polymer in einem zweiten Extruder, um eine zweite Mischung zu bilden;
- in dem Extruderkopf (2) die gleichzeitige Extrusion der gebildeten zweiten Mischung mit der ersten Mischung, sodass das Polymer mindestens teilweise die Teilchen umschließt;

wobei auf der Basis der gebildeten zweiten Mischung eine erste Schicht (4) auf dem Kunststoffstrang (3) gebildet wird, welche erste Schicht mindestens teilweise die Außenfläche dieses Kunststoffstrangs (3) bedecken soll.

**2.** Verfahren zum Bilden von Imitationszweigen (1) nach Anspruch 1, **dadurch gekennzeichnet, dass** der Kunststoffstrang (3) mit mindestens der ersten Schicht (4) versehen wird, daraufhin gekühlt und auf die erwünschte Länge gekürzt wird, wobei während des Kühlens der Kunststoffstrang (3) mindestens teilweise durch ein sich bewegendes Kühlmedium (4) gezogen wird, woraufhin der Kunststoffstrang (3) über mindestens einen Teil seines Wegs durch das Kühlmedium (4) vollständig in das Kühlmedium (4) eingetaucht wird.

**3.** Verfahren nach Anspruch 2, **dadurch gekennzeichnet, dass** während des Kühlens Gasblasen auf mindestens einem Teil der Außenfläche des Kunststoffstrangs (3) bereitgestellt werden, welche Gasblasen an unregelmäßigen Stellen die Oberfläche des Kunststoffstrangs (3) gegen das Kühlmedium (4) isolieren, wobei der Kunststoffstrang (3) auf seiner Außenfläche zumindest teilweise mit Ladungen in der Oberflächenstruktur versehen wird.

**4.** Verfahren nach Anspruch 2 oder 3, **dadurch gekennzeichnet, dass** das Kühlmedium Wasser ist und dass die Gasblasen Luft- und/oder Stickstoffblasen sind.

**5.** Verfahren zum Bilden von Imitationszweigen (1) nach einem der vorhergehenden Ansprüche, **dadurch gekennzeichnet, dass** die Pflanzenfasern Holzfasern sind.

**6.** Verfahren zum Bilden von Imitationszweigen (1) nach einem der vorhergehenden Ansprüche, **dadurch gekennzeichnet, dass** der gebildete Kunststoffstrang (3) eine röhrenförmige Konstruktion aufweist.

**7.** Verfahren zum Bilden von Imitationszweigen (1) nach einem der vorhergehenden Ansprüche, **dadurch gekennzeichnet, dass** das Verfahren ferner die folgenden Schritte umfasst:

- das Mischen mindestens einer Menge Polymer mit mindestens einer Menge Zusatzmittel, um eine dritte Mischung zu bilden;
- die Coextrusion der gebildeten dritten Mischung mit der zweiten Mischung;

wobei auf der Basis der gebildeten dritten Mischung eine zweite Schicht auf mindestens einem Teil der ersten Schicht (4) bereitgestellt wird.

**8.** Verfahren zum Bilden von Imitationszweigen (1) nach einem der vorhergehenden Ansprüche, **dadurch gekennzeichnet, dass** auf dem Niveau des Extrusionskopfauslasses die Geschwindigkeit, mit der die Polymermasse durch den Extrusionskopf (2) geführt wird, gegenseitig auf den verschiedenen Seiten des Extrusionskopfauslasses verschieden ist.

**9.** Imitationszweig (1), umfassend einen Kunststoffstrang (3), der aus expandierbarem Kunststoff hergestellt ist, wobei der Kunststoffstrang (3) über mindestens einen Teil seiner Außenfläche mit einer ersten Schicht (4) versehen wird, die mit dem Kunststoffstrang (3) durch Coextrusion verbunden wird, wobei diese erste Schicht aus einem Verbundstoffmaterial hergestellt ist bestehend aus:

- einer Menge Teilchen, die Pflanzenfasern umfassen;
- einer Menge Polymer, wobei dieses Polymer mindestens teilweise die Teilchen umschließt.

**10.** Wandplatte umfassend eine Anzahl von Imitationszweigen (1) nach Anspruch 9 oder umfassend eine Anzahl von Imitationszweigen, die einem in einem der Ansprüche 1 bis 8 beschriebenen Verfahren entsprechend hergestellt sind.

**11.** Wandstruktur umfassend eine Wandplatte nach Anspruch 10, wobei die Wandplattenstruktur einen Metall- oder Holzrahmen umfasst, zwischen dem oder gegen den die Wandplatte montiert wird.

**Revendications**

**1.** Procédé de formation de branches d'imitation (1), dans lequel une masse de polymère comprenant du plastique expansible est fondue sous pression dans une première extrudeuse afin de former un premier mélange, est ensuite acheminée à travers une tête d'extrusion (2) et est tirée à partir de cette tête d'extrusion (2) sous la forme d'un fil de plastique (3), le procédé comprenant en outre ainsi les étapes suivantes :

- mélanger au moins une certaine quantité de particules comprenant des fibres végétales avec au moins une certaine quantité de polymère dans une seconde extrudeuse afin de former un deuxième mélange ;
- dans ladite tête d'extrusion (2), extruder simultanément le deuxième mélange formé avec le premier mélange de telle sorte que lesdites particules soient au moins partiellement incorporées dans le polymère ;

de sorte que, à partir du deuxième mélange formé, une première couche (4) soit formée sur le fil de plastique (3), laquelle première couche étant destinée à recouvrir au moins partiellement la surface extérieure de ce fil de plastique (3).

2. Procédé de formation de branches d'imitation (1) selon la revendication 1, **caractérisé en ce que** le fil de plastique (3) est pourvu d'au moins la première couche (4), est ensuite refroidi et est raccourci à la longueur souhaitée, le fil de plastique (3) étant, au cours du refroidissement, au moins partiellement tiré à travers un milieu de refroidissement en mouvement (4), le fil de plastique (3) étant alors, au moins sur une partie de son trajet à travers le milieu de refroidissement (4), complètement immergé dans ce milieu de refroidissement (4).

3. Procédé selon la revendication 2, **caractérisé en ce que**, au cours du refroidissement, des bulles de gaz sont formées sur au moins une partie de la surface extérieure du fil de plastique (3), lesquelles bulles de gaz, à des emplacements irréguliers, isolant la surface du fil de plastique (3) vis-à-vis du milieu de refroidissement (4), le fil de plastique (3) étant ainsi au moins partiellement doté, sur sa surface extérieure, de modifications de sa structure superficielle.

4. Procédé selon la revendication 2 ou 3, **caractérisé en ce que** ledit milieu de refroidissement est de l'eau et **en ce que** lesdites bulles de gaz sont des bulles d'air et/ou d'azote.

5. Procédé de formation de branches d'imitation (1) selon l'une des revendications précédentes, **caractérisé en ce que** lesdites fibres végétales sont des fibres de bois.

6. Procédé de formation de branches d'imitation (1) selon l'une des revendications précédentes, **caractérisé en ce que** le fil de plastique (3) formé est de configuration tubulaire.

7. Procédé de formation de branches d'imitation (1) selon l'une des revendications précédentes, **caractérisé en ce que** le procédé comprend en outre les étapes suivantes :

   - mélanger au moins une certaine quantité de polymère avec au moins une certaine quantité d'additif afin de former un troisième mélange ;
   - extruder conjointement le troisième mélange formé avec le deuxième mélange ; de sorte que, à partir du troisième mélange formé, une deuxième couche soit formée sur au moins une partie de la première couche (4).

8. Procédé de formation de branches d'imitation (1) selon l'une des revendications précédentes, **caractérisé en ce que**, au niveau de la sortie de la tête d'extrusion, la vitesse à laquelle la masse de polymère est acheminée à travers la tête d'extrusion (2) est mutuellement différente sur les différents côtés de la sortie de la tête d'extrusion.

9. Branche d'imitation (1), comprenant un fil de plastique (3) constitué d'un plastique expansible, ledit fil de plastique (3) étant pourvu, sur au moins une partie de sa surface extérieure, d'une première couche (4) qui est reliée au fil de plastique (3) par coextrusion, cette première couche étant produite à partir d'un matériau composite constitué de :

   - une certaine quantité de particules comprenant des fibres végétales ;
   - une certaine quantité de polymère, lesdites particules étant au moins partiellement incorporées dans ce polymère.

10. Panneau mural comprenant un certain nombre de branches d'imitation (1) selon la revendication 9 ou comprenant un certain nombre de branches d'imitation produites selon un procédé décrit dans l'une des revendications 1 à 8.

11. Structure de mur comprenant un panneau mural selon la revendication 10, ladite structure de mur comprenant un cadre de métal ou de bois à l'intérieur duquel ou contre lequel est installé le panneau mural.

**Fig. 1**

**Fig. 2**

**Fig. 3**

**Fig. 4**

**Fig. 5**

**REFERENCES CITED IN THE DESCRIPTION**

**Patent documents cited in the description**

- NL 1032935 C
- US 20060185233 A